# EUROPEAN PATENT SPECIFICATION

(11) **EP 1 608 862 B1**
(45) Date of publication and mention of the grant of the patent: **05.12.2007**
(21) Application number: 04723645.0
(22) Date of filing: 26.03.2004
(51) Int. Cl.: F02G 1/043, F02G 1/047

(54) **A COMBINED HEAT AND POWER SYSTEM**
KRAFT-WÄRME-KOPPLUNGSANLAGE
SYSTEME THERMIQUE ET ELECTRIQUE COMBINE

(30) Priority: 28.03.2003 GB 0307283; 11.07.2003 GB 0316289
(43) Date of publication of application: 28.12.2005
(73) Proprietor: Microgen Energy Limited, Reading, Berkshire RG6 1PT (GB)
(72) Inventor: LOWRIE, James, Robert, Derby, Derbyshire DE1 2RR (GB); CLARK, David Anthony, Huntingdon, Cambridgeshire PE26 2RZ (GB); ALLDERIDGE, Heather, Derby, Derbyshire DE72 2AE (GB); HASKO, Stephen Michael, Huntingdon, Cambridgeshire PE28 4TQ (GB)
(74) Representative: Draper, Martyn John
(86) International application number: PCT/GB2004/001307
(87) International publication number: WO 2004/085820

(56) References cited:
- EP-A- 1 083 393
- WO-A-01/90656
- WO-A-03/033961
- DE-A- 3 151 960
- DE-C- 19 936 591
- US-A- 2 894 368

## Description

The present invention relates to a combined heat and power system. In particular, the present invention relates to a combined heat and power system comprising a Stirling engine having a head; a burner to heat the Stirling engine head so that the Stirling engine can generate electrical energy; a heat exchanger arranged to absorb heat from exhaust gases from the burner which have heated the engine head; and a supplementary burner to generate additional heat which is directly absorbed by the heat exchanger.

Such a combined heat and power system will subsequently be referred to as "of the kind described".

A system of the kind described is known for use in a domestic environment as a domestic combined heat and power (dchp) system. The Stirling engine supplies some of the domestic electrical power requirement with the remainder being supplied from the mains. The heat output from the Stirling engine supplies some of the domestic heat load with the remainder being supplied by the supplementary burner. The Stirling engine burner and supplementary burner are modulated to provide the heat output required by the home and the system is controlled to allow the Stirling engine to generate for as great a proportion of the time as is possible.

There are, however, limits on the range of heat output that can be obtained from the burners due to minimum flow requirements through each. This results in a step change in heat output when the engine burner capacity is exceeded. The combined supplementary and engine burners, both operating at minimum settings, will produce a higher heat output than the engine burner alone produces at its maximum. This will result in a lack of control of heat output in the operating region in between. As this has been found to be a critical operating area for the domestic heating system, this problem could result in a reduction in user comfort and system efficiency.

According to the present invention, in a system of the kind described, the supplementary burner is a multi-stage burner with separate stages which are independently controllable.

By having multiple independently controllable stages, more exact control can be provided of the heat output across the full range required.

Greater flexibility is provided if at least one stage has a different heat output range from that of another stage. In practice, the range of heat output of each stage can be made different.

In order to introduce further flexibility still, at least one of the supplementary burner stages may be arranged to heat both the heat exchanger directly and the Stirling engine head. Thus, when this stage is being fired without the engine burner being fired, the Stirling engine will operate at a reduced electrical output. While when this stage is being operated together with the engine burner, the Stirling engine will operate at peak electrical output.

The supplementary burner may be positioned anywhere provided that it can provide adequate heat to the heat exchanger. However, preferably, the supplementary burner is radially outward of the heat exchanger as this provides for more convenient packaging.

The heat exchanger may have any known construction, for example it can be provided by a duct surrounded by a water jacket. However, preferably, the heat exchanger comprises a helical coil or several helical coils connected in series for a heat exchanger fluid wound around an axis and which extends along the full axial length of the supplementary burner. This provides an efficient way of packaging a multi-stage burner as those coils which are adjacent to the burner stage(s) which is/are being fired will receive heat in an efficient manner.

Also, with the helical coil arrangement, part of the coil can be arranged to surround part of the Stirling engine head to provide the supplementary burner stage which is arranged to heat the Stirling engine head and the heat exchanger directly as referred to above.

The Stirling engine may be mounted with its head uppermost as is well known in the art. However, preferably, the Stirling engine is mounted with its head lowermost and the supplementary burner and heat exchanger being positioned directly beneath the head. One benefit of this arrangement is that it is a simple matter to provide a drain for fluids which have condensed out of the combustion gases. Another benefit is that the engine can be hung from at least one spring attached to its top end. Such a mounting allows easy access to the engine for routine maintenance and for routing water pipes to and from the engine.

An additional problem encountered in the design of a heat exchanger for a dchp system has been the removal of condensate from the helical tubing inside the supplementary heat exchanger. Our earlier application PCT/GB02/05711 discloses a heat exchanger with a tubing helically wound about a horizontal axis. With such an arrangement some of the condensate collects on the horizontal areas of the tubing.

It is usual to mount the Stirling engine from resilient mounting to allow the Stirling engine to vibrate. The vibrations can be reduced by mounting an absorber mass resiliently to the engine which can be tuned to vibrate in counter-phase to the Stirling engine thereby reducing the overall vibration. The ancillary elements of the system such as the burners and heat exchanger are then mounted separately from the Stirling engine.

However, it has been found that, if the heat exchanger is mounted on the Stirling engine, a residual amount of vibration will be passed to the heat exchanger which will aid in removing the condensate.

Preferably, the heat exchanger is mounted substantially only the Stirling engine so as to vibrate together with the engine.

The engine must be dynamically balanced. Therefore, preferably, the mass of the heat exchanger is balanced about the main axis of the invention. This avoids the need for complex counterbalancing measures.

This construction is particularly effective if the Stirling engine is mounted with its head lowermost and the heat exchanger is mounted directly beneath the head.

Also, preferably, the heat exchanger comprises a helical coil centred on the main axis of the engine. The Stirling engine has a main axis which is preferably coaxial with an axis about which the helical coil is wound. By arranging the heat exchanger in this way, there are no horizontal surfaces, such that a condensate can flow down the pipes aided by the vibration transmitted from the Stirling engine.

An example of the system in accordance with the present invention will now be described with reference to the accompanying drawings, in which:
Fig. 1 is a schematic cross-section of the system;
Fig. 2 is a schematic perspective view of the valve assembly; and
Fig. 3 is a graphical representation of the valve sleeve orifice profiles.

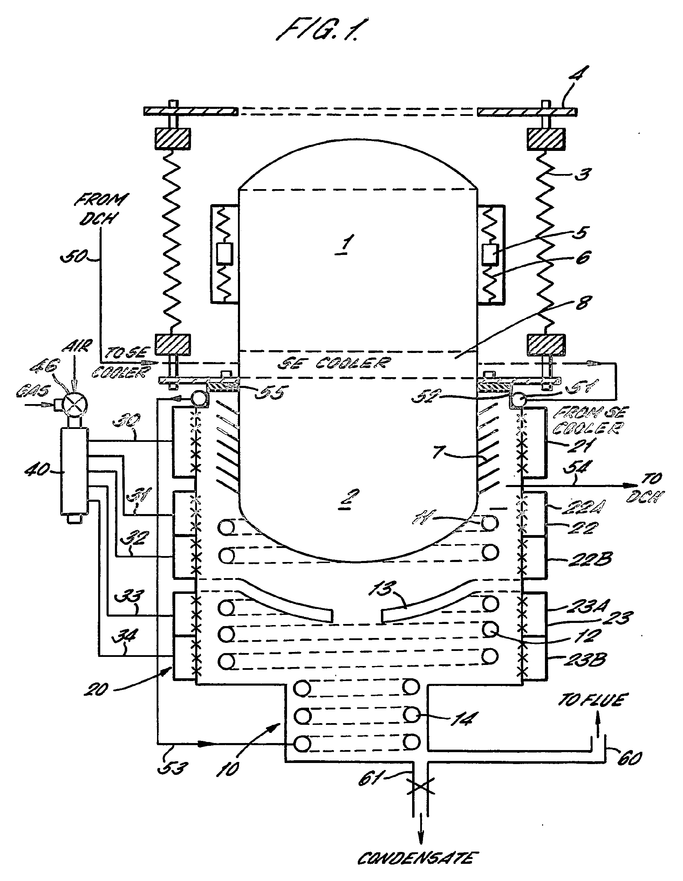

Fig. 1 shows the overall Stirling engine assembly. This comprises a Stirling engine 1 which is mounted in "inverted" configuration, namely with the engine head 2 lowermost. The engine is suspended from a plurality of springs 3 attached to a mounting bracket 4 and which surrounds the engine 1. Alternatively it could be suspended from a single centrally located spring. An annular absorption mass 5 surrounds the engine and is attached thereto by a plurality of resilient mounts 6 in order to absorb vibrations of the engine. The engine head 2 is provided with a plurality of annular fins 7 which absorb heat in a manner to be described thereby heating the engine head. The engine also has an engine cooler 8 which is cooled by circulating water again in a manner to be described.

A heat exchanger is provided by a helical coil 10 which is coaxial with the Stirling engine 1. The coil 10 surrounds the bottom end of the head 2 beneath the fins 7, and then extends axially below the engine 1. The coil 10 is provided in three distinct stages. The first stage 11 surrounds the engine head 2, the second stage 12 is beneath the engine head 2 and is separated therefrom by a baffle 13 which is perforated at its outer periphery. The third stage 14 is axially below the second stage 12 and is wound at a smaller radius than the first two stages. The third stage 14 is not surrounded by a burner. The baffle 13 maintains the temperature and pressure in the first 11 and second 12 stages when the third stage 14 is not firing. Also, heat from the first 11 and second 12 stages is reflected back onto the head 2 of the engine 1.

The burner 20 has an annular configuration and surrounds the engine head 2 and the coil 10. The burner 20 is also divided into stages. A first stage 21 surrounds the engine head 2 and annular fins 7. A second stage 22 surrounds the lower end of the engine head 2 and the first stage coils 11. The third stage 23 of the burner surrounds the second stage coils 12.

It should also be noted that the second 22 and third 23 burner stages are each themselves divided into two sub-stages 22A, 22B, 23A, 23B each of which is independently operable. Each of the first burner stage 21, the second sub-stages 22A, 22B and third sub-stages 23A, 23B has a separate supply of air and combustible gas along lines 30, 31, 32, 33 and 34 respectively. Each of the stages is also provided with its own ignition system and dedicated ignition control such that each can be ignited independently. It should also be noted that, elsewhere in the specification, references are made to "a burner to heat the Stirling engine" and "a supplementary burner". These two burners can be part of a single multi-stage burner as described with reference to Fig. 1.

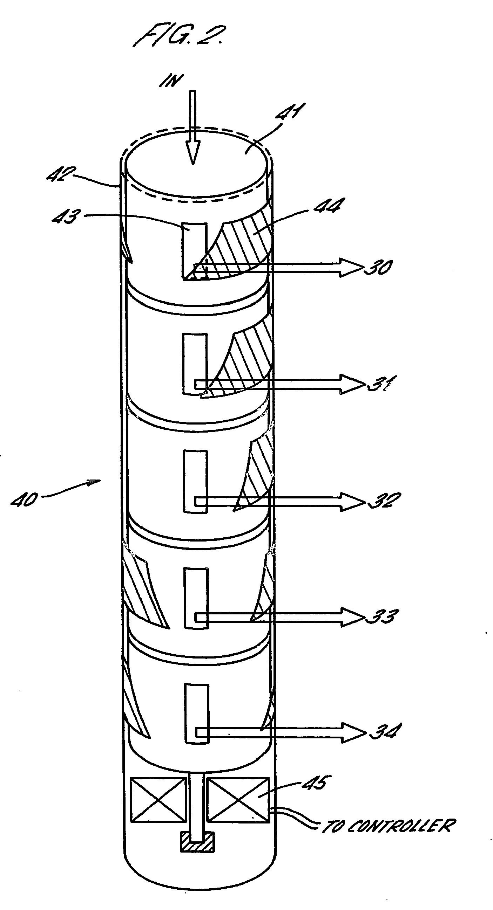

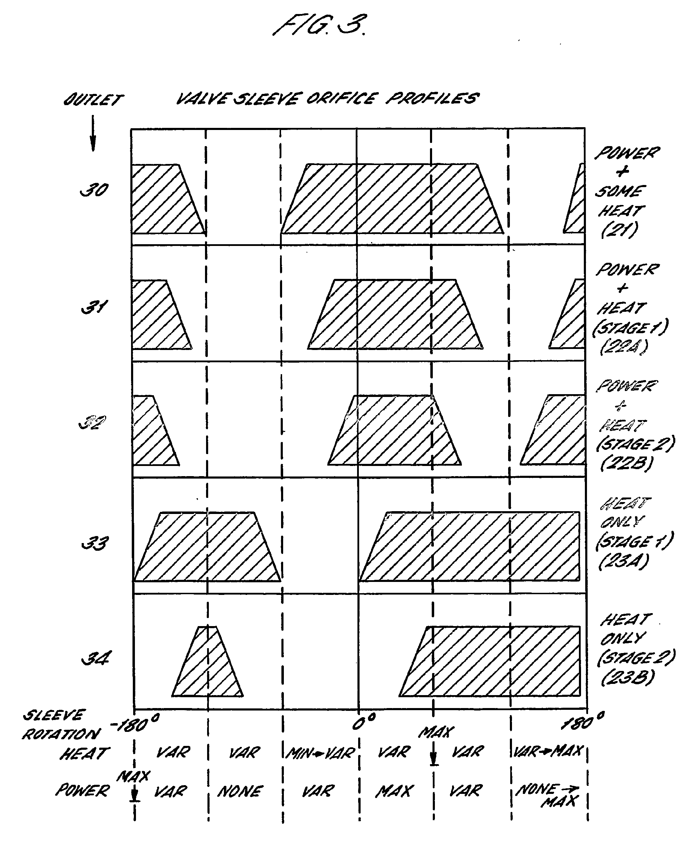

The control of the gas and air mixture is achieved by valve 40 as described in more detail in Figs. 2 and 3.

The valve 40 comprises an inner sleeve 41 and outer sleeve 42. For each outlet line the inner 41 and outer 42 sleeves have a pair of orifices 43, 44 of different shapes which are arranged to overlap to differing degrees as the inner 41 and outer 42 sleeves are rotated with respect to one another. The flow through each of the lines 30-34 is determined by the degree of overlap of the two orifices. A solenoid 45 in the lower end of the housing with the valve 40 provides the relative rotational movement between the inner 41 and outer 42 sleeve.

The relative sizes of the orifices 43, 44 are arranged to ensure that the flow through each outlet 30-34 is, as closely as possible, a linear function of the rotary position of the inner 41 and outer 42 sleeves.

A detailed view of the orifice profiles is given in Fig. 3. The hatched areas represent the projection of the orifices 44 onto a flat plane. Fig. 3. This shows the positions for which the heat and power output are variable (VAR), maximum (MAX), minimal (MIN), or zero (NONE). It will be appreciated that independent control of all of the outlet streams is not possible through all of the lines 30-33 given the fixed relationship between the two sets of orifices 43, 44. However, it will be appreciated from Fig. 1 that true independence of all of the stages of the burner is not absolutely necessary. For example, for the second stage 22, it will be necessary either to fire first sub-stage 22A alone or to fire this sub-stage in combination with the second sub-stage 22B. However, it will not be necessary to fire the second sub-stage 22B alone. Similar considerations apply to the third stage 23. If greater independence is required the inner sleeve 41 may be separated into a number of independently rotatable segments.

In use, the operation of the Stirling engine assembly is determined by the domestic demand for electricity and heat. If the demand for electricity is high and the demand for heat is low, the first burner stage 21 and optionally the second burner stage 22 will be fired. Conversely, if the demand for heat is high and the demand for electricity is low, the third burner stage 23 and optionally the second burner stage 22 will be fired. If demand for both electricity and heat is high, all burner stages will be fired. Within these extremes are a number of intermediate settings provided by the various burner stages and sub-stages allowing a high degree of control of the electrical power and heat generation.

Gas and air for the burners is mixed in a fan/Venturi gas valve arrangement 46 and the speed of the fan can be controlled to vary the overall amount of gas supplied to the various burner stages. The position of the inner sleeve 41 of the valve 40 within the outer sleeve 42 is then determined according to the system requirements to ensure the correct supply of gas and air to the various burner stages.

Alternatively, the gas may be mixed with the air downstream of the valve 40. This means that the valve 40 does not have to be sealed to allow pre-mixing. However, it would require a gas/air mixer for each stream from the valve 40.

Water from the domestic central heating system is fed into the Stirling engine system along line 50 where it first cools the engine cooler 8 and hence absorbs low grade heat. It is then circulated around an annular passage 51 where it cools a seal 52 between the first stage burner 21 and the engine housing. Optionally, one or more cooling channels may feed the water around the outside casing of the burner. These channels may either be in series with or parallel to the passage 51 around the seal 52. The water is then fed along line 53 into the supplementary heat exchanger 10. It initially passes around the third stage 14 in which it picks up relatively low grade heat as the third stage is not heated directly by a burner stage. It then circulates up through the helical windings through the second 12 and first 11 windings respectively where it is heated by whichever burner stages are active at the time before finally exiting along line 54 to the domestic central heating system.

The exhaust gas from the various burner stages exits along flue 60, while condensate from the exhaust gases is drained along condensate drain 61 which is positioned to avoid any dead space where fluid could build up and cause corrosion.

As can be seen in Fig. 1, the heat exchanger coil 10 and burner assembly 20 are mounted directly from the Stirling engine 1 via an annular bracket 55. Thus, the small residual vibration of the Stirling engine 1 which remains despite the effect of the absorption mass 5 is transmitted to the coils of the supplementary heat exchanger. Any condensation which settles on the coils is encouraged by this vibration to flow along the downwardly angled surfaces of the coil 10 ultimately to the condensate drain 60.

## Claims

1. A combined heat and power system comprising a Stirling engine (1) having a head (2); a burner (20) to heat the Stirling engine so that the Stirling engine can generate electrical energy; a heat exchanger arranged to absorb heat from exhaust gases from the burner which have heated the engine head; and a supplementary burner (23) to generate additional heat which is directly absorbed by the heat exchanger; wherein the supplementary burner is a multi-stage (23A, 23B) burner with separate stages which are independently controlled.

2. A system according to claim 1, wherein at least one stage has a heat output range which is different from that of another stage.

3. A system according to claim 1 or claim 2, wherein at least one of the supplementary burner stages is arranged to heat both the heat exchanger directly and the Stirling engine head.

4. A system according to any one of the preceding claims, wherein the supplementary burner is radially outward of the heat exchanger.

5. A system according to any one of the preceding claims, wherein the heat exchanger comprises a helical coil (12) wound around an axis and which extends along the full axial length of the supplementary burner.

6. A system according to claim 5, when dependent upon claim 3, wherein the helical coil also surrounds part of the Stirling engine head.

7. A system according to any one of the preceding claims, wherein the Stirling engine is mounted with its head lowermost and the supplementary burner and heat exchanger are directly beneath the head.

8. A system according to claim 7, wherein the engine is hung from at least one spring attached to its top end.

9. A system according to any one of the preceding claims, wherein the heat exchanger is mounted on the Stirling engine.

10. A system according to claim 9, wherein the heat exchanger is mounted substantially only on the Stirling engine so as to vibrate together with the engine.

11. A system according to claim 10, wherein the engine has a main axis of reciprocation and the mass of the heat exchanger is balanced about the main axis of the engine.

12. A system according to claim 10 or 11, wherein the burner is mounted together with the engine and the heat exchanger.

## Patentansprüche

1. Kombiniertes Wärme- und Kraftsystem, umfassend einen Stirlingmotor (1) mit einem Kopf (2); einen Brenner (20), um den Stirlingmotor zu erwärmen, so dass der Stirlingmotor elektrische Energie erzeugen kann; einen Wärmetauscher, welcher derart angeordnet ist, dass er Wärme aus Abgasen von dem Brenner, welche den Motorkopf erwärmt haben, absorbiert; und einen Zusatzbrenner (23), um zusätzliche Wärme zu erzeugen, welche unmittelbar durch den Wärmetauscher absorbiert wird; wobei der Zusatzbrenner ein Brenner aus mehreren Stufen (23A; 23B) mit gesonderten Stufen ist, welche unabhängig gesteuert/geregelt werden.

2. System nach Anspruch 1, bei welchem wenigstens eine Stufe einen Wärmeausgabebereich aufweist, welcher von jenem einer anderen Stufe verschieden ist.

3. System nach Anspruch 1 oder Anspruch 2, bei welchem wenigstens eine der Zusatzbrennerstufen derart angeordnet ist, dass sie sowohl den Wärmetauscher unmittelbar als auch den Stirlingmotorkopf erwärmt.

4. System nach einem der vorhergehenden Ansprüche, bei welchem der Zusatzbrenner sich radial außerhalb des Wärmetauschers befindet.

5. System nach einem der vorhergehenden Ansprüche, bei welchem der Wärmetauscher eine Wendelspule (12) umfasst, welche um eine Achse herum gewickelt ist und welche sich entlang der vollen axialen Länge des Zusatzbrenners erstreckt.

6. System nach Anspruch 5, unter Rückbeziehung auf Anspruch 3, bei welchem die Wendelspule ebenso einen Teil des Stirlingmotorkopfs umgibt.

7. System nach einem der vorhergehenden Ansprüche, bei welchem der Stirlingmotor derart angebracht ist, dass sein Kopf am tiefsten Punkt ist und der Zusatzbrenner und der Wärmetauscher sich unmittelbar unter dem Kopf befinden.

8. System nach Anspruch 7, bei welchem der Motor von wenigstens einer Feder herabhängt, welche an seinem oberen Ende angebracht ist.

9. System nach einem der vorhergehenden Ansprüche, bei welchem der Wärmetauscher an den Stirlingmotor montiert ist.

10. System nach Anspruch 9, der welchem der Wärmetauscher im Wesentlichen nur an den Stirlingmotor montiert ist, um gemeinsam mit dem Motor zu vibrieren.

11. System nach Anspruch 10, bei welchem der Motor eine Hauptachse einer Hin- und Herbewegung aufweist und die Masse des Wärmetauschers um die Hauptachse des Motors herum ausbalanciert ist.

12. System nach Anspruch 10 oder 11, bei welchem der Brenner zusammen mit dem Motor und dem Wärmetauscher montiert ist.

## Revendications

1. Système thermique et électrique combiné comprenant un moteur Stirling (1) comportant une culasse (2) ; un brûleur (20) pour chauffer le moteur Stirling de sorte que le moteur Stirling puisse générer de l'énergie électrique ; un échangeur thermique agencé pour absorber la chaleur des gaz d'échappement provenant du brûleur qui ont chauffé la culasse de moteur ; et un brûleur supplémentaire (23) pour générer de la chaleur supplémentaire qui est directement absorbée par l'échangeur thermique ; dans lequel le brûleur supplémentaire est un brûleur à niveaux multiples (23A, 23B) avec des niveaux distincts qui sont indépendamment commandés.

2. Système selon la revendication 1, dans lequel au moins un niveau présente une plage de sortie de chaleur qui est différente de celle d'un autre niveau.

3. Système selon la revendication 1 ou la revendication 2, dans lequel au moins l'un des niveaux du brûleur supplémentaire est agencé pour chauffer à la fois l'échangeur thermique directement et la culasse de moteur Stirling.

4. Système selon l'une quelconque des revendications précédentes, dans lequel le brûleur supplémentaire se trouve radialement à l'extérieur de l'échangeur thermique.

5. Système selon l'une quelconque des revendications précédentes, dans lequel l'échangeur thermique comprend une bobine hélicoïdale (12) enroulée autour d'un axe et qui s'étend le long de la longueur axiale totale du brûleur supplémentaire.

6. Système selon la revendication 5, lorsqu'elle dépend de la revendication 3, dans lequel la bobine hélicoïdale entoure également une partie de la culasse de moteur Stirling.

7. Système selon l'une quelconque des revendications précédentes, dans lequel le moteur Stirling est monté avec sa culasse au niveau le plus bas et le brûleur supplémentaire et l'échangeur thermique se trouvent directement sous la culasse.

8. Système selon la revendication 7, dans lequel le moteur est suspendu par au moins un ressort attaché à son extrémité supérieure.

9. Système selon l'une quelconque des revendications précédentes, dans lequel l'échangeur thermique est monté sur le moteur Stirling.

10. Système selon la revendication 9, dans lequel l'échangeur thermique est monté sensiblement uniquement sur le moteur Stirling de manière à vibrer avec le moteur.

11. Système selon la revendication 10, dans lequel le moteur présente un axe principal de mouvement alternatif et la masse de l'échangeur thermique est équilibrée autour de l'axe principal du moteur.

12. Système selon la revendication 10 ou 11, dans lequel le brûleur est monté avec le moteur et l'échangeur thermique.
